# EUROPEAN PATENT APPLICATION

(11) **EP 3 595 255 A1**
(43) Date of publication of application: **15.01.2020**
(21) Application number: 18183221.3
(22) Date of filing: 12.07.2018
(51) Int. Cl.: H04L 29/06

(54) **INCREASING NETWORK SECURITY BY ESTABLISHING A PLURALITY OF ACTIVE SECURITY ASSOCIATIONS FOR A SECURITY POLICY IDENTIFIER**

(71) Applicant: Nokia Solutions and Networks Oy, 02610 Espoo (FI)
(72) Inventor: SRINIVAS, Bandi, 560061 Bangalore (IN); CHELUVARAJU, Narayana, 560040 Bangalore (IN)
(74) Representative: Leppard, Andrew John

(57) **Abstract**

A method comprises: establishing a plurality of active security associations between network nodes for a security policy identifier.

## Description

### TECHNOLOGICAL FIELD

Various example embodiments relate to network security.

### BACKGROUND

Providing network security helps to secure data being transmitted between network nodes and helps to ensure the reliable operation of the network itself. In some networks the internet protocol security (IPSec) suite of protocols are followed whereby a security association is established or made active between two network nodes at the beginning of a session. The security association defines how data is to be transmitted between the network nodes during the session. However, this approach can have unexpected consequences. Accordingly, it is desired to provide for improved network security.

### BRIEF SUMMARY

According to various, but not necessarily all, embodiments of the invention there is provided a method, comprising: establishing a plurality of active security associations between network nodes for a security policy identifier.

The establishing may comprise establishing the plurality of active security associations between network nodes for a single security policy identifier.

The establishing may comprises establishing the plurality of active security associations between network nodes for each of a plurality of single security policy identifiers.

The establishing may comprise creating the plurality of active security associations between network nodes for the security policy identifier in a security association database.

The establishing may comprise creating the plurality of active security associations between a sending network node and at least one receiving network node.

The establishing may comprise creating the plurality of active security associations between a sending network node and a plurality of receiving network nodes.

The method may comprise allocating a selected active security association from the plurality of active security associations based on a selection criteria.

The allocating may comprise allocating the selected active security association by mapping one of the plurality of active security associations to the security policy identifier based on the selection criteria.

The mapping may comprise mapping the one of the plurality of active security associations to the security policy identifier in a security policy database.

The method may comprise maintaining a preference ordering to each of the plurality of active security associations.

The maintaining may comprise setting a preference field in the security association database for each active security association identifying the preference ordering.

The selection criteria may favour a higher preference active security association over a lower preference active security association and the mapping may comprise mapping one of the plurality of active security associations determined by the preference ordering to the security policy identifier.

The mapping may comprise mapping a most preferable one of the plurality of active security associations determined by the preference ordering to the security policy identifier.

The method may comprise maintaining a status indicator indicative of an operational state of that active security association to each of the plurality of active security associations.

The maintaining may comprise setting a status field in the security association database for each active security association as the status indicator.

The selection criteria may favour a functioning operational state over a non-functioning operational state and the mapping may comprise mapping one of the plurality of security associations determined by the status indicator to the security policy identifier.

The selection criteria may favour a functioning operational state, higher preference active security association over a non-functioning operation state, lower preference active security association and the mapping may comprise mapping one of the plurality of security associations determined by the status indicator and the preference ordering to the security policy identifier.

The method may comprise mapping a most preferable, functional operational state one of the plurality of security associations determined by the status indicator and the preference ordering to the security policy identifier.

The method may comprise adjusting the status indicator in response to traffic conditions for each security association.

The method may comprise adjusting the status indicator in response to operating conditions of the network nodes.

The method may comprise transmitting a data packet between the network nodes using the selected security association.

The method may comprise receiving a data packet, determining a security policy identifier for that data packet and transmitting the data packet between the network nodes using the selected security association for that security policy identifier.

In one embodiment there is provided a computer program product operable, when executed by a computer, to perform the preceding method steps.

According to various, but not necessarily all, embodiments of the invention there is provided an apparatus, comprising security association logic configured to establish a plurality of active security associations between network nodes for a security policy identifier.

The security association logic may be configured to establish the plurality of active security associations between network nodes for a single security policy identifier.

The security association logic may be configured to establish the plurality of active security associations between network nodes for each of a plurality of single security policy identifiers.

The security association logic may comprise a security association database and may be configured to create the plurality of active security associations between network nodes for the security policy identifier in the security association database.

The security association logic may be configured to create the plurality of active security associations between a sending network node and at least one receiving network node.

The security association logic may be configured to create the plurality of active security associations between a sending network node and a plurality of receiving network nodes.

The security association logic may be configured to allocate a selected active security association from the plurality of active security associations based on a selection criteria.

The security association logic may be configured to allocate the selected active security association by mapping one of the plurality of active security associations to the security policy identifier based on the selection criteria.

The security association logic may comprise a security policy database and may be configured to map the one of the plurality of active security associations to the security policy identifier in the security policy database.

The security association logic may be configured to maintain a preference ordering to each of the plurality of active security associations.

The security association logic may be configured to set a preference field in the security association database for each active security association identifying the preference ordering.

The security association logic may favour a higher preference active security association over a lower preference active security association and the security association logic may be configured to map one of the plurality of active security associations determined by the preference ordering to the security policy identifier.

The security association logic may be configured to map a most preferable one of the plurality of active security associations determined by the preference ordering to the security policy identifier.

The security association logic may be configured to maintain a status indicator indicative of an operational state of that active security association to each of the plurality of active security associations.

The security association logic may be configured to set a status field in the security association database for each active security association as the status indicator.

The selection criteria may favour a functioning operational state over a non-functioning operational state and the security association logic may be configured to map one of the plurality of security associations determined by the status indicator to the security policy identifier.

The selection criteria may favour a functioning operational state, higher preference active security association over a non-functioning operation state, lower preference active security association and the security association logic may be configured to map one of the plurality of security associations determined by the status indicator and the preference ordering to the security policy identifier.

The security association logic may be configured to map a most preferable, functional operational state one of the plurality of security associations determined by the status indicator and the preference ordering to the security policy identifier.

The security association logic may be configured to adjust the status indicator in response to traffic conditions for each security association.

The security association logic may be configured to adjust the status indicator in response to operating conditions of the network nodes.

The security association logic may be configured to transmit a data packet between the network nodes using the selected security association.

The security association logic maybe configured to receive a data packet, determine a security policy identifier for that data packet and transmit the data packet between the network nodes using the selected security association for that security policy identifier.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
Fig. 1 illustrates the operation of a network according to one embodiment;
Fig. 2 illustrates the operation when incoming packets are received;
Fig. 3 illustrates the situation where a data packet fails to be delivered to the primary security gateway;
Fig. 4 illustrates the operation of the source node in more detail during dynamic switchover; and
Fig. 5 illustrates the security policy database and the security association database in more detail

### DETAILED DESCRIPTION

Before discussing the example embodiments in any more detail, first an overview will be provided. One embodiment recognises that a problem with existing network security arrangements is that security and network isolation for traffic provided with IPSec protection can be inefficient. For example, one end of an IPSec tunnel may be a network node such as, for example, a wireless access point, and the other end of the tunnel may be another network such as, for example, a security gateway that aggregates traffic in and out of a core network. The IPSec tunnel is created by a security association between the network nodes which defines the parameters and operation of data transmissions between the network nodes via that IPSec tunnel for data packets associated with a particular security policy identifier. Resiliency of the IPSec connection over the IPSec tunnel is an essential requirement for uninterrupted service availability and continuity. Generally, resiliency for IPSec tunnels is achieved with redundant security gateways, with an alternative path to a redundant security gateway from the wireless access point with only one security association being active at any one time. Such an approach leads to an extended switch of time since a security association between the wireless access point and the security gateway is established or made active between the wireless access point and the security gateway at the beginning of the session. A security policy database is updated and mapped to use the active security association as soon as the connection is established or made active. A packet processor identifies a security policy identifier for data packets received and transmits packets in accordance with the active security association for that security policy identifier. Only once a failure in traffic transmission between the wireless access point and the security gateway is detected is that active security association removed and a new security association established or made active between the wireless access point and the redundant security gateway. In other words, in an example network, primary and secondary security gateways may be configured by an operator but only a single security association is established or made active for a particular security policy identifier. Should a fault be detected for traffic being transmitted in accordance with the active security association, that security association is removed, the alternative security association to the other security gateway is established or made active for that security policy identifier. The security policy database is updated and mapped to use the alternative active security association as soon as the alternative connection is established. Traffic is then switched to being transmitted in accordance with the alternative security association by the packet processor.

The time taken to detect a fault with traffic being transmitted using the active security association, its removal and establishing a new alternative active security association can be in the order of hundreds of milliseconds depending on network implementation and latency. In particular, a latency of 500 to 700 milliseconds has been observed in some networks. This can cause packets to be dropped or buffered when the packet processor is not able to find a matching security association for the policy in the security policy database. It is recognised that latency and high availability is a critical factor in 5G fronthaul, radio cloud network infrastructure and in other networks. Latency in 4G networks is around 15 to 20 milliseconds, while it can be 25 to 30 milliseconds in networks using HSPA+. When using 5G networks in mission-critical use cases, such as driving cars or other automation, the latency requirement needs to be lower than that provided in 4G networks together with high resiliency. Accordingly, latency in 5G fronthaul would need to be in the order of microseconds, and so switchover to an alternative redundant secure path needs to be very quick (almost real-time) to avoid packet loss.

Accordingly, one embodiment provides a method. The method may be a network node method or a method performed by network node. The method may comprise establishing, configuring or activating more than one active security associations between network nodes. The multiple active security associations may be provided for a security policy identifier. In this way, more than one active security association can be established or configured for a particular security policy identifier.

The multiple active or configured security associations maybe established for a single, sole or unitary security policy identifier. In this way, the security policy identifier has multiple active or established security associations which may be used and which can be selected between at-near real-time speed for the transmission of data packets without needing to wait for a new active security association to be established. In other words, for any security policy identifier, multiple active security associations between network nodes may be established. Typically, one of those active security associations is selected for transmission of data associated with the security policy identifier. Should those data transmissions fail then a different active security association may be selected instead for the transmission of data packets. Switching between the active security associations is fast, since they are already established, which provides both high resiliency and low latency.

### Network Operation

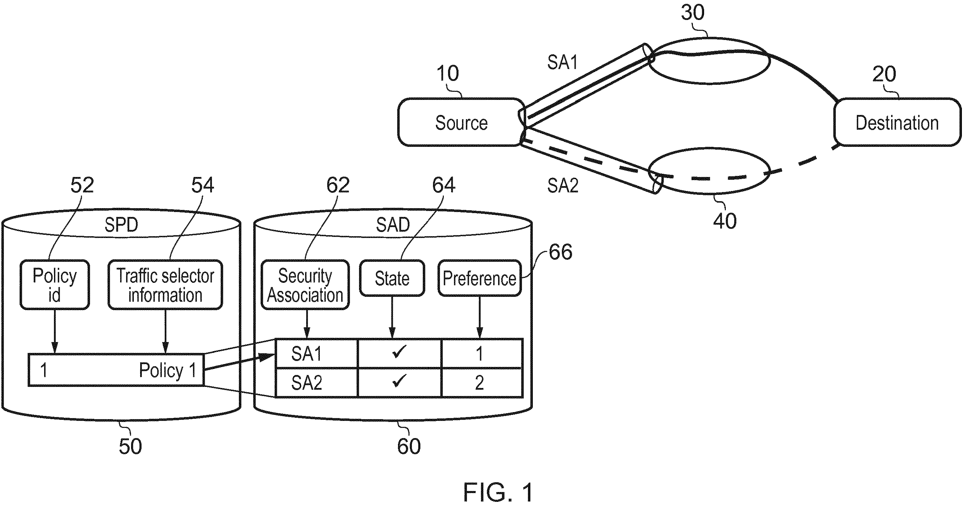

Fig. 1 illustrates the operation of a network according to one embodiment. In this embodiment, data packets maybe transmitted from a source node 10 to a destination node 20 via a primary security gateway 30. Data packets may also be transmitted from the source node 10 to the destination node 20 via a secondary security gateway 40.

A security policy database 50 is maintained for the source node 10. The security policy database 50 contains a policy identifier field 52 and traffic selector information field 54. For any data packet transmitted from the source node 10, the packet is examined and a policy identifier determined. A security association database 60 is maintained for the source node 10. The security association database 60 contains information about active or established security associations for each policy. In this example, when the session was initiated for transmission of data packets from the source node 10 to the destination node 20, active security associations were established between the source node 10 and the primary security gateway 30, as well as between the source node 10 and the secondary security gateway 40. That is to say, multiple security associations are established simultaneously for a single security policy identifier.

Accordingly, for each security policy, multiple active security associations are established and their details maintained in the security association database 60. The security association database 60 contains a security association identifier field 62, an operational status indicator field 64 and a preference field 66. The security association field identifies each active or configured security association for that policy identifier. In this example, there are two security associations SA1, SA2 established for security policy identifier 1, one with the primary security gateway 30 and one with the secondary security gateway 40. It will be appreciated that multiple security associations may be provided with each gateway and that additional gateways may be used. The operational status indicator field 64 indicates that both security associations are functional or available, meaning that no indication has been received that either link over which data packets may be transmitted between the source node 10 and the gateways are non-functioning or that the gateways themselves are non-functioning. The preference field provides an indication of which security association is preferable. In this example, the preference field indicates that security association SA1 is more preferable than security association SA2.

### Initial Operation

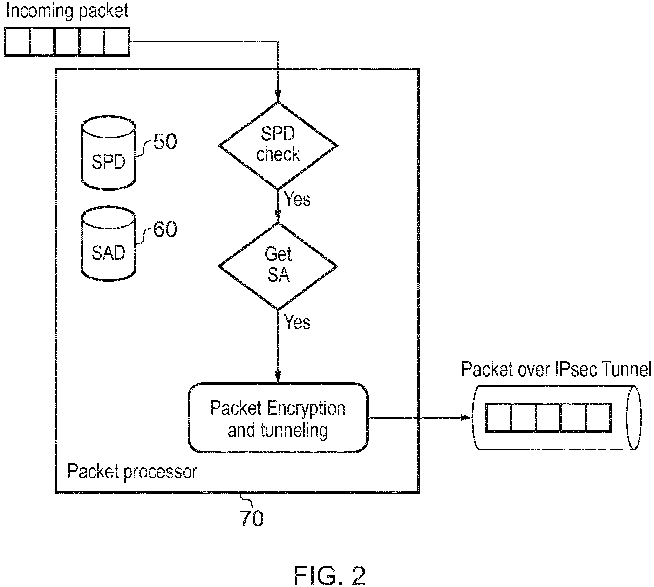

In operation, as shown in Fig. 2, incoming packets are received and a packet processor checks the security policy database 50. In this example, the security policy database 50 indicates that the packets are associated with security policy 1. Security policy 1 maintains a link with entries in the security association database 60, which indicates that security associations SA1 and SA2 are active and have been established between the source node 10 and the security gateways 30, 40. The security association database 60 indicates that both security associations are functioning or operational and that security association SA1 is preferred. Accordingly, the packet processor 70 transmits data packets from the source node 10 to the primary gateway 30 using security association SA1. Data packets associated with security policy 1 can continue to be transmitted from the source node 10 to the primary security gateway 30 using the security association SA1.

### Fallover Operation

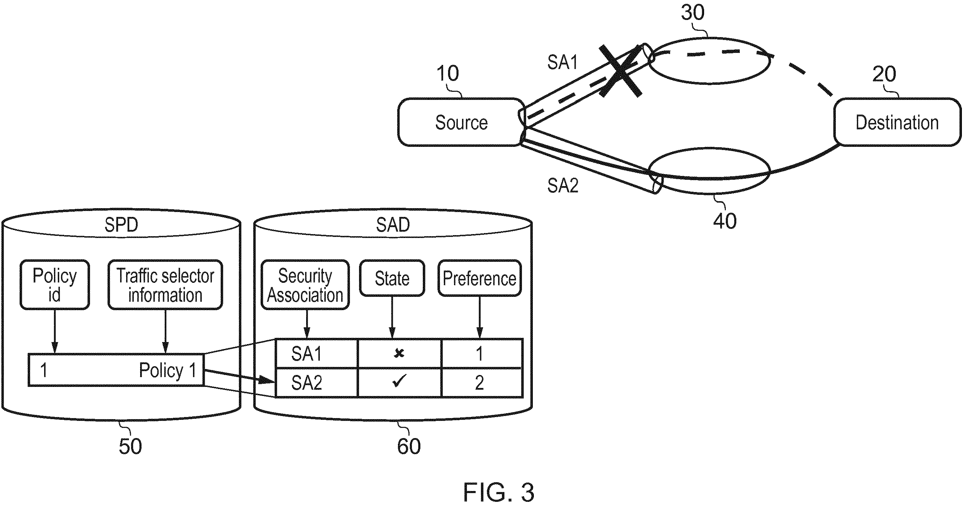

Fig. 3 illustrates the situation where a data packet fails to be delivered to the primary security gateway 30. This can occur due to a failure of the link between the source node 10 and the primary security gateway 30, a failure of the primary security gateway 30 itself, or where configuration changes in the network cause the link to be removed, its performance degraded or the primary security gateway 30 to reject data packets.

This failure is detected and the operational status indicator field 64 for security association SA1 is updated to be non-functional or non-operational. The packet processor 70 is then able to immediately transmit data packets using another active security association for that policy. In this example, security association SA2 is functional or operational and the next most preferable security association to use and so the data packets are transmitted between the source node 10 and the secondary security gateway 40 using the security association SA2. Since both security associations are already active, meaning that they are established and available for immediate use, there is no further delay in transmitting the data packets and so the latency is improved whilst retaining network resiliency.

Should the link be re-established between the source node 10 and the primary security gateway 30, or should the primary security gateway be able to receive data packets, then the operational status indicator field 64 for security association SA1 may be returned to functional, meaning that the packet processor would revert to sending data packets from the source node 10 to the primary security gateway 30 using the security association SA1.

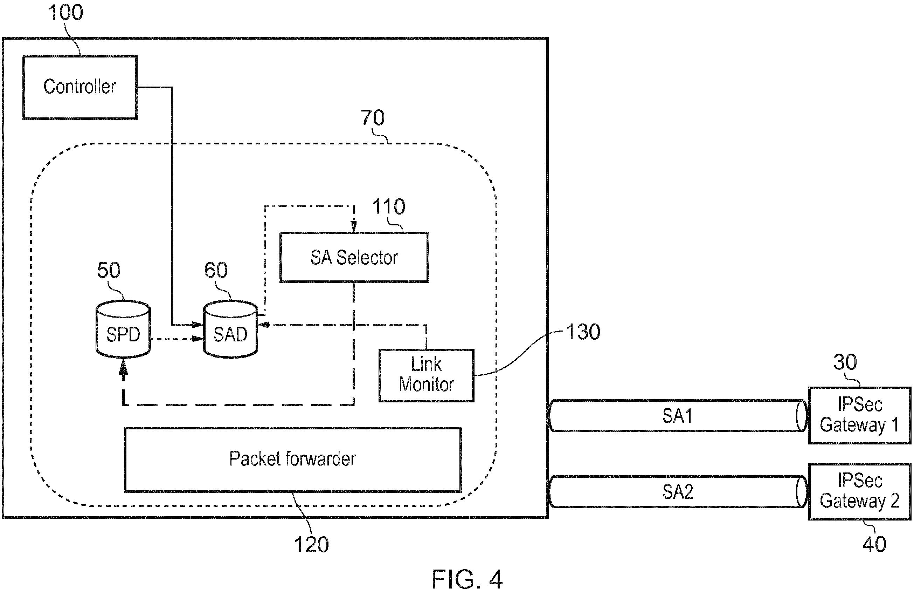

Fig. 4 illustrates the operation of the source node in more detail during dynamic switchover. The dynamic switching of the security association outbound traffic is a particular advantage of this embodiment. A controller 100 may update the preference value of one or more security associations in the security association database 60 dynamically based on runtime traffic analysis, emergency / disaster situation or security gateway maintenance activities. Similarly, a link monitor 130 may update the functional or operational state of one or more security associations in the security association database 60 dynamically based on runtime traffic analysis, emergency / disaster situation or security gateway maintenance activities.

Update of the preference value or the functional or operational state in the security association database 60 would trigger security selection logic 110. The security selection logic 110 updates the security policy database with the with preferred operational security association. The sender (packet forwarder) starts forwarding packets over the newly selected security association without any service breakdown.

### Databases

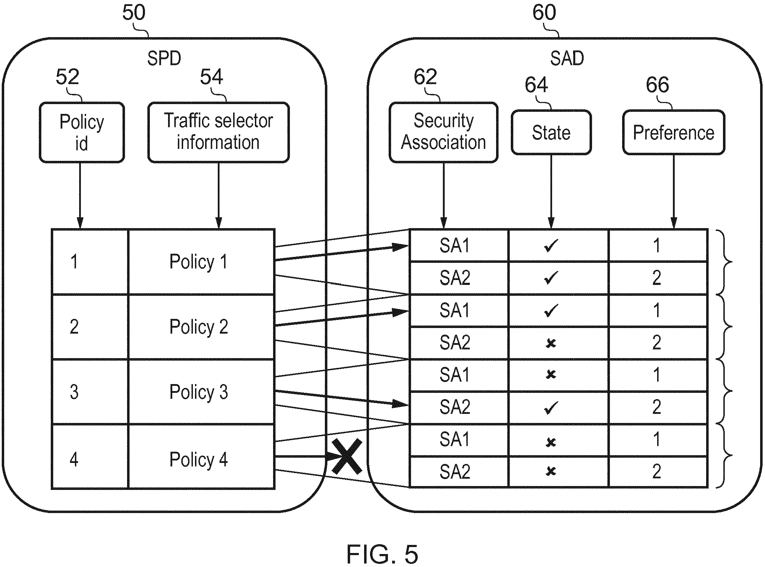

Fig. 5 illustrates the security policy database 50 and the security association database 60 in more detail. As can be seen, multiple policies may be provided for different types of data packets. Each policy has more than one active security association associated therewith. The preference ordering of the security associations is indicated, as is the functional state of each of those associations. As can be seen, for security policy 1, both security associations are active and so data would be transmitted using security association SA1. For security policy 2, security association SA2 is non-functional and so security association SA1 would be used for transmitting data packets. For security policy 3, security association SA1 is non-functional and so security association SA2 would be used for transmitting data packets. For security policy 4, neither security associations are functional and so it would not be possible to transmit data packets without establishing a further active security association (if indeed that is possible).

An embodiment provides for multiple active (e.g. Primary & secondary) Security Associations (SA) towards security gateways or other network nodes in a redundancy configuration, to terminate IPsec, using extensions limited to the IPsec framework. An embodiment provides an Enhanced Security Association Database (SAD) to include preference and SA state for each of the configured SA(s). The programmable preference ordering of SA enables dynamic SA selection. An embodiment can be used in any network entity (e.g. physical or virtual NFs such as eNB/gNB, routers) to which redundant security paths are defined towards security gateways. On embodiment can be adapted for IPsec implementation in Linux by extending the current model of Security Association Database (SAD) and Security Policy Database (SPD) and their mutual relationship. Dynamic and Programmable SA selection of one embodiment provides two enhancements to IPsec architecture. 1) Enhanced SAD which includes preference and SA state for each of the configured SA. The SA state identifies the current state and preference value provides ordering among active SAs. 2) Programmable SA preference ordering to enable dynamic SA selection. The preference value can be changed programmatically at run-time to create a new ordering of active SAs, thereby allowing dynamic selection of an SA among the candidates. In one embodiment, the time taken for IPsec SA switchover is reduced. In one embodiment, simultaneous active SAs from source to both security gateways (e.g. SG1 & SG2 as shown above) are established at the same time and the SA state is maintained with an enhanced SAD at the time of SA establishment. Both SAs are active at the same time, a preferred SA (SA1) is selected based on ordering of preference values among the active SAs. Upon failure of SA1, the policy in the SPD is immediately mapped to SA2 of the SAD (Best among the remaining active SAs). The packets start using SA2 almost instantaneously and entire time taken to establish a new SA is avoided. The sender always finds the matching SA as long as, one of the candidate SAs is active. Hence, packet loss or buffering at the source is completely avoided. The dynamic SA selection is based on the enhanced SAD and the association with SPD is as follows: 1) For a specific policy ID in SPD, identify all operational SAs. 2) Among the operation SAs, identify the preferred SA (Lower the value, higher the preference). 3) The SPD is updated with the preferred SA. One embodiment provides advantages such as: 1) Introducing one-to-many mapping between policy to security association, enables high resiliency with multiple backup SA provisioning. 2) Each SA is configured with a preference value to enable choice of a preferred SA. 3) The preference value can be configured at start-up as part of IPsec policy configuration and even dynamically using the SDN controller at run-time which enables a dynamic choice of SA and traffic switching across security associations for better traffic management. 4) All configured security associations are established and active all the time, thereby enabling faster packet routing (switch-over) over alternate SA as compared to existing techniques. 5) Avoidance of packet loss or buffering of packets at source during switchover. 6) No additional overhead to IPsec framework to provide resiliency to Network Elements (e.g. eNB/gNB) towards core network. The resiliency logic is built into Network elements.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method, comprising:
establishing a plurality of active security associations between network nodes for a security policy identifier.

2. The method of claim 1, wherein said establishing comprises creating said plurality of active security associations between network nodes for said security policy identifier in a security association database.

3. The method of claim 1 or 2, wherein said establishing comprises creating said plurality of active security associations between a sending network node and at least one receiving network node.

4. The method of any preceding claim, comprising allocating a selected active security association from said plurality of active security associations based on a selection criteria.

5. The method of claim 4, wherein said allocating comprises allocating said selected active security association by mapping one of said plurality of active security associations to said security policy identifier based on said selection criteria.

6. The method of claim 5, wherein said mapping comprises mapping said one of said plurality of active security associations to said security policy identifier in a security policy database.

7. The method of any preceding claim, comprising maintaining a preference ordering to each of said plurality of active security associations.

8. The method of claim 7, wherein said maintaining comprises setting a preference field in said security association database for each active security association identifying said preference ordering.

9. The method of claim 7 or 8, wherein said selection criteria favours a higher preference active security association over a lower preference active security association and said mapping comprises mapping one of said plurality of active security associations determined by said preference ordering to said security policy identifier.

10. The method of any preceding claim, comprising maintaining a status indicator indicative of an operational state of that active security association to each of said plurality of active security associations.

11. The method of claim 10, wherein said maintaining comprises setting a status field in said security association database for each active security association as said status indicator.

12. The method of claim 10 or 11, wherein said selection criteria favours a functioning operational state over a non-functioning operational state and said mapping comprises mapping one of said plurality of security associations determined by said status indicator to said security policy identifier.

13. The method of any one of claims 10 to 12, wherein said selection criteria favours a functioning operational state, higher preference active security association over a non-functioning operation state, lower preference active security association and said mapping comprises mapping one of said plurality of security associations determined by said status indicator and said preference ordering to said security policy identifier.

14. The method of any one of claims 10 to 13, comprising adjusting said status indicator in response to traffic conditions for each security association.

15. An apparatus, comprising:
security association logic configured to establish a plurality of active security associations between network nodes for a security policy identifier.
